# FASCICULE DE BREVET EUROPEEN

(11) **EP 0 906 558 B1**
(45) Date de publication et mention de la délivrance du brevet: **14.05.2003**
(21) Numéro de dépôt: 97929347.9
(22) Date de dépôt: 13.06.1997
(51) Int. Cl.: G01L 3/10, G01L 5/22

(54) **ARBRE TOURNANT INCORPORANT UN DISPOSITIF DE MESURE DE COUPLE DE TORSION**
DREHENDE WELLE MIT ANORDNUNG ZUR MESSUNG DES DREHMOMENTS
ROTATING SHAFT INCORPORATING A DEVICE FOR MEASURING TORSIONAL MOMENT

(30) Priorité: 21.06.1996 FR 9607731
(43) Date de publication de la demande: 07.04.1999
(73) Titulaire: SNR ROULEMENTS, 74010 Annecy Cédex (FR)
(72) Inventeur: NICOT, Christophe, F-74330 Epagny (FR)
(74) Mandataire: Srour, Elie
(86) Numéro de dépôt international: FR9701069
(87) Numéro de publication internationale: WO97049976

(56) Documents cités:
- EP-A- 0 453 344
- EP-A- 0 576 310
- EP-B- 0 144 803

## Description

L'invention concerne un arbre tournant incorporant un dispositif de mesure de couple de torsion.

L'invention concerne plus particulièrement un arbre tournant incorporant un dispositif de mesure de couple de torsion du type décrit par exemple dans la publication FR-2692986. Ce dispositif comprend deux générateurs de champ magnétique, solidaires d'un premier support et situés dans le plan d'une section droite de l'arbre et deux dispositifs détecteurs de champ magnétique, solidaires d'un second support et immobilisés dans le plan d'une autre section droite dudit arbre. Un tel dispositif peut être monté directement sur un arbre tournant et ne nécessite a priori aucune réduction locale de la rigidité dudit arbre compte tenu de la sensibilité du dispositif en fonction du décalage angulaire. Dans les faits, on réalise néanmoins une faible réduction de diamètre de manière à localiser axialement la déformation en torsion de l'arbre. Dans tous les cas, l'arbre peut supporter l'intégralité du couple de commande sans moyens limiteurs additionnels de la déformation due à la torsion. Pour certaines applications, la longueur disponible sur l'arbre pour l'installation d'un tel dispositif de mesure de couple de torsion est limitée. C'est en particulier le cas au sein d'un boîtier de direction de véhicule automobile dans lequel un arbre tournant doit intégrer, sur une longueur d'implantation délimitée d'un côté par les cannelures d'engrènement de l'arbre de transmission de la direction et de l'autre côté, par le pignon de crémaillère, le dispositif de mesure de couple de torsion ainsi qu'un palier de roulement à billes. La précision de la mesure de torsion réalisée par le dispositif étant d'autant meilleure que les points d'appui des supports sont espacés l'un de l'autre, sur l'arbre, il est souhaitable de repousser. le plus possible lesdits supports aux extrémités de la longueur d'implantation, tout en préservant un emplacement à l'extrémité de ladite longueur d'implantation pour venir monter le palier de roulement. Une première solution consiste alors en ce que l'un des supports constitue le prolongement de la bague intérieure du palier de roulement, ladite bague étant montée serrée sur l'arbre de torsion et maintenue par un dispositif de retenue axiale du type circlip. La bague extérieure du palier de roulement est frettée dans un logement rigide et fixe en rotation. Dans ce montage, outre le fait que le dispositif de retenue axiale présente un certain encombrement axial, les efforts axiaux et radiaux appliqués sur l'arbre de torsion transitent donc de l'arbre de torsion au boîtier de fixation via le palier de roulement. Dans certains cas de chargement, l'immobilisation de l'arbre de torsion par rapport à la bague intérieure du palier de roulement peut s'avérer insuffisante, et ce d'autant plus qu'un assemblage aléatoire conduit à un serrage minimal, compte tenu des tolérances de fabrication. Ceci peut conduire à un déplacement relatif, en fonctionnement, des générateurs de champ magnétique par rapport à l'arbre de torsion et donc à un déplacement relatif en fonctionnement des générateurs de champ magnétique par rapport aux organes détecteurs de champ magnétique. Le positionnement de réglage initial est modifié et le dispositif capteur de couple est alors déréglé et délivre un signal erroné. Une autre solution consiste à venir monter la bague intérieure du palier de roulement autour de l'appui sur l'arbre d'un des supports. Mais ceci implique une augmentation du diamètre extérieur du palier de roulement et donc un encombrement extérieur incompatible avec le logement rigide dudit palier et d'une façon plus globale avec l'espace réservé au montage.

L'arbre selon l'invention apporte une solution à ces difficultés d'intégration. A cet effet, l'invention concerne un arbre tournant, muni d'un dispositif de mesure du couple de torsion comprenant deux organes détecteurs du champ magnétique disposés symétriquement par rapport à l'arbre, montés sur un premier support fixé au droit d'un premier point de l'axe dudit arbre, et deux générateurs de champ magnétique disposés symétriquement par rapport à l'arbre, montés sur un second support fixé au droit d'un second point de l'axe dudit arbre, le premier et le second points étant axialement décalés l'un par rapport à l'autre. L'arbre se caractérise en ce que la bague intérieure d'un premier palier de roulement est usinée dans l'arbre, à la périphérie de cet arbre, au droit du point de fixation de l'un des supports, dit second support.

Cette configuration permet d'écarter au maximum, l'un de l'autre, les points de fixation des supports des organes capteurs et des organes générateurs de champ magnétique, sans nuire à la qualité de la fixation desdits supports sur l'arbre.

Selon une autre caractéristique de l'invention, la bague intérieure est usinée à la périphérie d'un collet intégré dans l'arbre, le support principal étant fixé sur l'épaulement dudit collet en regard de l'autre support.

Cette caractéristique permet une fixation simple et pratique du support sur la bague intérieure du premier palier.

Selon une autre caractéristique de l'invention, la bague extérieure du premier palier comporte une bride de fixation.

Cette caractéristique permet de fixer l'arbre sans avoir recours à un boîtier extérieur présentant de bonnes caractéristiques mécaniques.

Selon une autre caractéristique de l'invention, l'arbre présente, entre les deux points de fixation des supports, une réduction de son diamètre.

Cette caractéristique permet de localiser axialement la déformation en torsion.

Selon une autre caractéristique de l'invention, l'arbre se prolonge, à l'extérieur des points de fixation des supports, par un pignon de crémaillère du côté du support principal, par des cannelures de l'autre côté.

Selon une autre caractéristique de l'invention, le pignon de crémaillère se prolonge par une portée d'arbre usinée de manière à constituer la bague intérieure d'un second palier de roulement.

Selon une autre caractéristique de l'invention, le premier palier est un roulement à billes et le second un roulement à aiguilles.

Selon une autre caractéristique de l'invention, le support principal est constitué par le second support.

Cette caractéristique privilégie le démontage du premier support par rapport à celui du second, les organes détecteurs de champ magnétique portés par le premier support étant plus susceptibles de défaillances que les générateurs qui sont généralement de simples aimants.

D'autres caractéristiques et avantages apparaîtront à la lecture de la description d'un exemple de dispositif selon l'invention, en référence aux dessins dans lesquels :
- la figure 1 est une vue en demi-coupe longitudinale de l'arbre selon l'invention muni de son dispositif de mesure du couple de torsion et d'un palier de roulement à billes,
- la figure 2 est une vue en demi-coupe longitudinale de l'arbre selon l'invention,
- la figure 3 est une vue en perspective de l'arbre selon l'invention muni de son palier de roulement à billes.

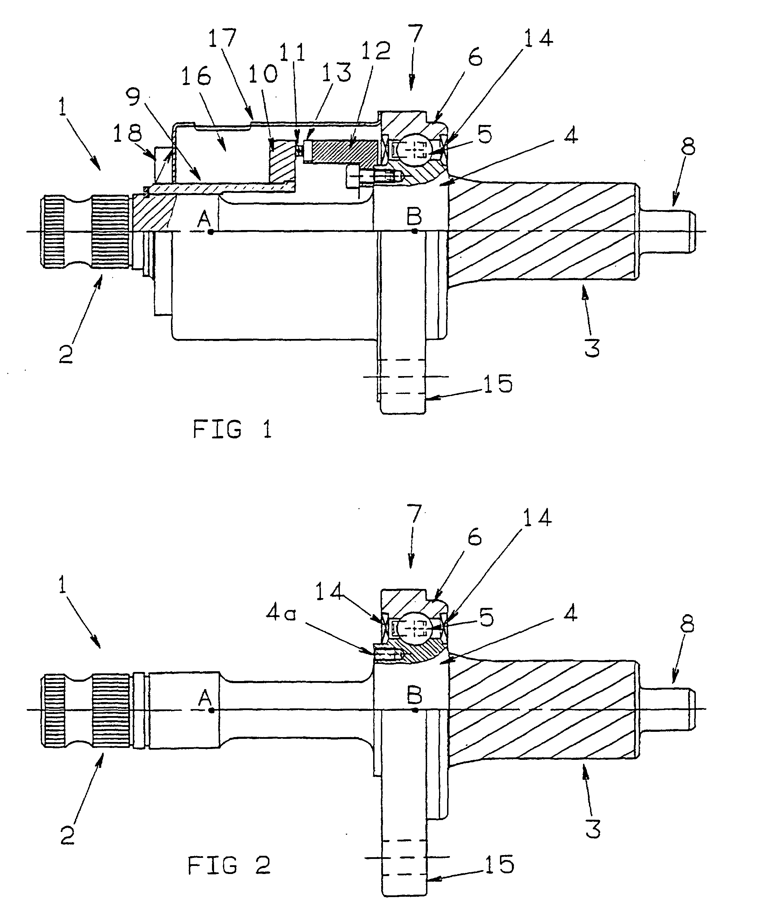

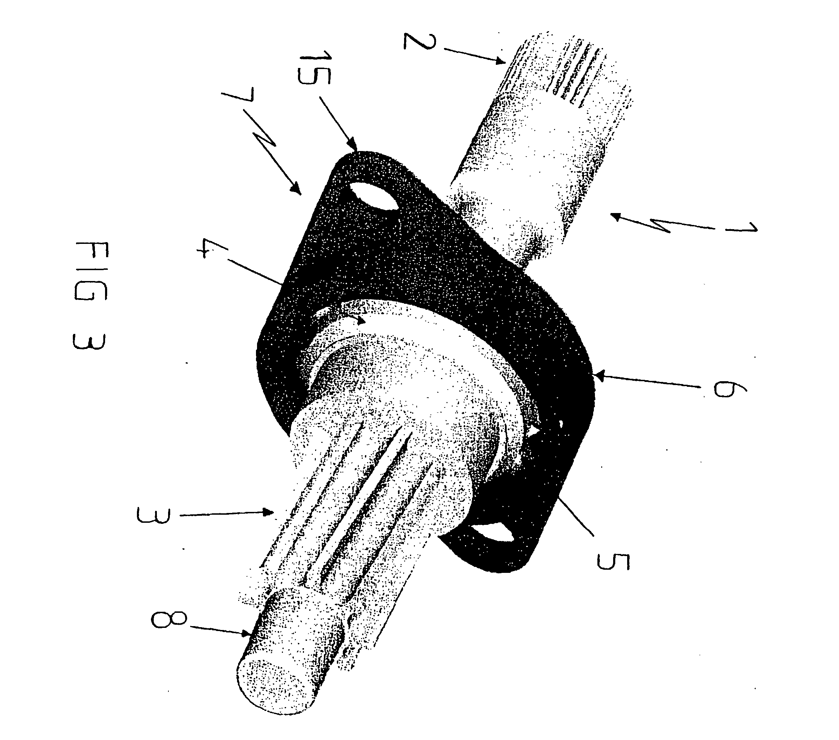

L'arbre 1 représenté sur les figures 1 et 3 est, selon un exemple de réalisation de l'invention, l'arbre réalisant, au sein d'un système de direction, la liaison entre la crémaillère et l'arbre de transmission de la colonne de direction (non représentés). A cet effet, l'arbre 1 comporte à son extrémité gauche des cannelures 2 permettant son raccordement à l'arbre de transmission de la colonne de direction. L'extrémité droite porte un pignon de crémaillère 3. L'arbre 1 comporte, situé immédiatement à la gauche du pignon de crémaillère 3, une portion de plus grand diamètre constituant un collet 4 à la périphérie duquel est usinée une piste de roulement destinée à recevoir les corps roulants, et en particulier des billes 5 retenues dans une bague extérieure 6 de manière à constituer un premier palier de roulement 7. La bague intérieure de ce roulement est donc constituée par le collet 4. Le pignon de crémaillère 3 se prolonge sur sa droite par une portée d'arbre 8 de section réduite, usiné de manière à constituer la bague intérieure d'un second palier de roulement, à aiguilles.

La figure 1 représente l'arbre 1 équipé d'un dispositif de mesure du couple de torsion dont le fonctionnement est décrit dans la publication FR-2692986. L'arbre 1 porte un premier support 9 sensiblement tubulaire qui se prolonge radialement par une partie annulaire 10 portant deux organes détecteurs de champ magnétique 11 disposés symétriquement par rapport à l'axe de l'arbre 1, l'un des organes détecteurs 11 n'étant pas visible sur la demi-coupe de la figure 1. L'arbre 1 porte également un second support 12 sensiblement tubulaire, fixé sur l'épaulement 4a du collet 4, tourné vers le premier support 9. Le second support 12 porte deux organes générateurs de champ magnétique 13 disposés symétriquement par rapport à l'axe de l'arbre 1 et faisant face aux organes détecteurs 11, l'un des organes générateurs 13 n'étant pas visible sur la demi-coupe de la figure 1. Le second support 12 pourra être fixé à l'épaulement 4a du collet 4 par tout moyen connu de l'homme du métier, par exemple par collage ou encore par vissage comme il est représenté sur les figures. Cette disposition permet d'écarter au maximum les points A,B de l'axe de l'arbre 1, situés respectivement au droit des points de fixation des premier 9 et second supports 12, comme il est représenté sur les figures. En effet, il est souhaitable, de manière à optimiser la précision de la mesure du couple de torsion, d'écarter au maximum ces deux points A et B à l'intérieur de l'espace compris entre les cannelures 2 et le pignon de crémaillère 3. De plus, il est nécessaire, à l'intérieur de ce même espace, d'assurer la fixation du palier de roulement 7. La disposition décrite ci-dessus permet de satisfaire ces deux exigences. De plus, la bague intérieure constituée par le collet 4 et porteuse du second support 12 fait partie de l'arbre 1 ; elle n'est donc pas susceptible de se déplacer par rapport audit arbre 1 et d'entraîner ainsi des imprécisions de la mesure, comme ce pourrait être le cas avec un roulement indépendant dont la bague intérieure porterait le second support 12. En effet, dans ce cas, les efforts transmis par le palier de roulement 7 transiteraient par l'intermédiaire du second support, ce qui n'est pas le cas avec l'arbre 1 selon l'invention. De plus, le montage selon l'invention n'entraîne pas d'augmentation du diamètre du palier de roulement 7 du fait que le second support 12 est fixé latéralement sur le collet 4 constituant la bague intérieure dudit palier 7. Celui-ci comporte éventuellement un ou plusieurs dispositifs d'étanchéité 14 et sa bague extérieure 6 intègre une bride de fixation 15 de l'arbre 1 au boîtier de direction, comme il est représenté sur la figure 3. La bague extérieure 6 pourra, par exemple être réalisée à partir d'une ébauche forgée.

De manière à localiser axialement la déformation en torsion de l'arbre 1 entre le premier 9 et le second support 12, l'arbre 1 présente entre lesdits supports 9,12 une réduction de diamètre. Un passage tournant 16 peut être réalisé à l'intérieur du boîtier de direction par l'intermédiaire d'un capot 17 fixé sur la bague extérieure 6 du palier 7 et dont l'étanchéité par rapport à l'arbre 1 est assurée par un joint 18. Ce capot 17, qui n'assure plus la fonction mécanique de fixation du palier 7, maintenant assurée par la bride 15 de la bague extérieure 6 dudit palier 7, peut être réalisé en tôle mince emboutie.

Bien entendu, l'invention n'est nullement limitée au mode de réalisation décrit et illustré qui n'a été donné qu'à titre d'exemple. En particulier, l'invention est applicable à tout type d'arbre sur lequel il est nécessaire d'intégrer un dispositif de mesure de couple de torsion et un palier, sur une longueur limitée dudit arbre.

## Revendications

1. Arbre (1) tournant, muni d'un dispositif de mesure du couple de torsion comprenant deux organes détecteurs (11) du champ magnétique disposés symétriquement par rapport à l'arbre (1), montés sur un premier support (9) fixé au droit d'un premier point (A) de l'axe dudit arbre (1), et deux générateurs (13) de champ magnétique disposés symétriquement par rapport à l'arbre (1), montés sur un second support (12) fixé au droit d'un second point (B) de l'axe dudit arbre, le premier (A) et le second (B) points étant axialement décalés l'un par rapport à l'autre, **caractérisé en ce que** la bague intérieure d'un premier palier (7) de roulement est usinée dans l'arbre (1), à la périphérie de cet arbre (1) et au droit du point (B) de fixation de l'un des supports (9,12), dit second support (12).

2. Arbre (1) tournant selon la revendication précédente, **caractérisé en ce que** la bague intérieure d'un premier palier (7) de roulement est usinée à la périphérie d'un collet (4) intégré dans l'arbre (1), le second support (12) étant fixé sur l'épaulement (4a) dudit collet (4), en regard de l'autre support (9).

3. Arbre (1) tournant selon l'une quelconque des revendications précédentes, **caractérisé en ce que** la bague extérieure (6) du premier palier (7) comporte une bride de fixation (15).

4. Arbre (1) tournant selon l'une quelconque des revendications précédentes, **caractérisé en ce que** ledit arbre (1) présente, entre les deux points de fixations (A,B) des supports (9,12), une réduction de son diamètre.

5. Arbre (1) tournant selon l'une quelconque des revendications précédentes, **caractérisé en ce qu'**il se termine, de part et d'autre des points de fixations (A,B) des premier (9) et second (12) supports, par un pignon (3) de crémaillère du côté du second support (12), par des cannelures (2) de l'autre côté.

6. Arbre tournant selon la revendication précédente, **caractérisé en ce que** le pignon (3) de crémaillère se prolonge par une portée d'arbre (8) usinée de manière à constituer la bague intérieure d'un second palier de roulement.

7. Arbre (1) tournant selon la revendication précédente, **caractérisé en ce que** le premier palier (7) est un roulement à billes et le second un roulement à aiguilles.

## Patentansprüche

1. Drehwelle (1), die mit einer Vorrichtung zur Messung des Torsionsmomentes versehen ist, die zwei Anordnungen (11) zur Messung eines Magnetfeldes aufweist, welche symmetrisch zur Welle (1) auf einer ersten feststehenden Halterung (9) gegenüber einer ersten Stelle (A) der Achse dieser Welle (1) angeordnet sind, sowie zwei Erzeuger (13) für ein Magnetfeld aufweist, die symmetrisch zur Welle (1) auf einer zweiten feststehenden Halterung (12) gegenüber einer zweiten Stelle (B) der Achse dieser Welle angeordnet sind, wobei die erste Stelle (A) und die zweite Stelle (B) in Axialrichtung im Abstand voneinander angeordnet sind, **dadurch gekennzeichnet, dass** der Innenring eines ersten Rolllagers (7) in die Welle (1) entlang des Umfangs dieser Welle (1) und gegenüber der Stelle (B) der Befestigung einer der Halterungen (9,12), der zweiten Halterung (12), eingearbeitet ist.

2. Drehwelle (1) nach dem vorhergehenden Anspruch, **dadurch gekennzeichnet, dass** der Innenring eines ersten Rolllagers (7) entlang des Umfangs eines in die Welle (1) integrierten Flansches (4) eingearbeitet ist, wobei die zweite Halterung (12) an der Schulter (4a) des Flansches (4) gegenüber der anderen Halterung (9) befestigt ist.

3. Drehwelle (1) nach einem der vorhergehenden Ansprüche, **dadurch gekennzeichnet, dass** der Außenring (6) des ersten Lagers (7) mit einem Befestigungsbund (15) versehen ist.

4. Drehwelle (1) nach einem der vorhergehenden Ansprüche, **dadurch gekennzeichnet, dass** die Welle (1) zwischen den Stellen (A,B) der Befestigung der Halterungen (9,12) einen verringerten Durchmesser aufweist.

5. Drehwelle (1) nach einem der vorhergehenden Ansprüche, **dadurch gekennzeichnet, dass** ihre Enden zu beiden Seiten der Stellen (A,B) der Befestigung der ersten Halterung (9) und der zweiten Halterung (12) mit einem Zahnritzel (3) auf der Seite der zweiten Halterung (12) bzw. mit einer Riffelung (2) auf der gegenüberliegenden Seite versehen sind.

6. Drehwelle (1) nach dem vorhergehenden Anspruch, **dadurch gekennzeichnet, dass** das Zahnritzel (3) durch einen Wellenanschlag (8) derart verlängert ist, dass dieser den Innenring eines zweiten Rolllagers bildet.

7. Drehwelle (1) nach dem vorhergehenden Anspruch, **dadurch gekennzeichnet, dass** das erste Lager (7) ein Kugellager ist und das zweite Lager ein Nadellager ist.

## Claims

1. A rotary shaft (1) provided with a device for measuring torque, comprising two members for detecting magnetic fields (11) arranged symmetrically with respect to the shaft (1), mounted on a first support (9) fixed at a first point (A) of the axis of said shaft (1), and two magnetic field generators (13) arranged symmetrically with respect to the shaft (1), mounted on a second support (12) fixed at a second point (B) of the axis of said shaft, the first (A) and second (B) points being axially offset with respect to one another, **characterised in that** the internal ring of a first rolling bearing (7) is machined in the shaft (1), at the periphery of said shaft (1) and at the fixing point (B) of one of the supports (9, 12) designated the second support (12).

2. Rotary shaft (1) according to the preceding claim, **characterised in that** the internal ring of a first bearing (7) is machined at the periphery of the collar (4) integrated into the shaft (1), the second support (12) being fixed onto the shoulder (4a) of said collar (4), facing the other support (9).

3. Rotary shaft (1) according to any one of the preceding claims, **characterised in that** the external ring (6) of the first bearing (7) comprises a fixing flange (15).

4. Rotary shaft (1) according to any one of the preceding claims, **characterised in that** said shaft (1) has a reduction in its diameter between the two fixing points (A, B) for the supports (9, 12).

5. Rotary shaft (1) according to any one of the preceding claims, **characterised in that** it ends, on either side of the fixing points (A, B) for the first (9) and second (12) supports, with a rack pinion (3) on the side of the second support (12) and with grooves (2) on the other side.

6. Rotary shaft (1) according to the preceding claim, **characterised in that** the rack pinion (3) is extended by a length of shaft (8) machined such as to constitute the internal ring of a second rolling bearing.

7. Rotary shaft (1) according to the preceding claim, **characterised in that** the first bearing (7) is a ball bearing and the second is a needle bearing.
